# EUROPÄISCHE PATENTSCHRIFT

(11) **EP 1 013 416 B1**
(45) Veröffentlichungstag und Bekanntmachung des Hinweises auf die Patenterteilung: **04.06.2003**
(21) Anmeldenummer: 99124203.3
(22) Anmeldetag: 03.12.1999
(51) Int. Cl.: B32B 27/40, C08G 18/10, C08G 18/66, C08J 9/00, C08J 5/12

(54) **Verbundelemente enthaltend (i) thermoplastische Polyurethane und (ii) mikrozellige Polyurethanelastomere**
Composite material comprising (i) thermoplastic polyurethanes and (ii) microcellular polyurethane elastomers
Eléments composites comprenant (i) des polyuréthanes thermoplastiques et (ii) des polyuréthanes microcellulaires élastomères

(30) Priorität: 24.12.1998 DE 19860205
(43) Veröffentlichungstag der Anmeldung: 28.06.2000
(73) Patentinhaber: BASF AKTIENGESELLSCHAFT, 67056 Ludwigshafen (DE)
(72) Erfinder: Bollmann, Heinrich, 49594 Alfhausen (DE); Giesen, Klaus, 49401 Damme (DE); Krech, Ruediger, 49356 Diepholz (DE); Reich, Erhard, Dr., 49401 Damme (DE)

(56) Entgegenhaltungen:
- EP-A- 0 449 331
- WO-A-97/10278
- DE-A- 19 548 770
- DE-A- 19 548 771
- US-A- 4 346 205

## Beschreibung

Die Erfindung betrifft Verbundelemente enthaltend
(i) thermoplastische Polyurethane, im folgenden auch als TPU bezeichnet, und daran haftend
(ii)mikrozellige Polyurethanelastomere mit einer Dichte von 300 bis 700 kg/m³, einer Zugfestigkeit nach DIN 53571 von 3 bis 8 N/mm², einer Bruchdehnung nach DIN 53571 von 350 bis 550 %, einem Weiterreißwiderstand nach DIN 53515 von 8 bis 30 N/mm und einer Rückprallelastizität nach DIN 53512 von 50 bis 60 %.

Des weiteren betrifft die Erfindung Verfahren zur Herstellung dieser Verbundelemente und deren Verwendung.

Verbundelemente auf der Basis von Metallen und Gummi, im allgemeinen Sprachgebrauch auch als "Gummi-Metall-Verbunde" bezeichnet, sind allgemein bekannt. Sie finden breite Verwendung beispielsweise in den Fahrwerken von Straßenfahrzeugen und sind beispielhaft beschrieben in "Fahrwerktechnik: Radaufhängungen", 2. Auflage, Herausgeber Prof. Dipl.-Ing. Jörnsen Reimpell, Vogel Buchverlag Würzburg, insbesondere auf den Seiten 77, 83, 84, 87, 281, 286 und 290. Nachteilig an diesen Verbunden wirkt sich das hohe spezifische Gewicht des Metallanteils, die relativ kurze Lebensdauer des Gummis sowie ein Verlust der Haftung zwischen den starren und elastischen Elementen des Bauteils aus. Zur Verbesserung ist bekannt, Haftvermittler zu verwenden, die in flüssiger Phase auf die starren Elemente aufgetragen werden, erstarren und gegebenenfalls durch Erwärmung reaktiviert werden müssen. Diese Vorgänge des Auftragens und Reaktivierens sind zeit- und kostenaufwendig und sollten deshalb vermieden werden.

Als Ersatz des Gummis als elastisches Element ist allgemein bekannt, mikrozellige Polyurethanelastomere einzusetzen. DE-A 195 48 771 und 195 48 770 beschreiben derartige Polyurethanelastomere und deren Einsatz als Dämpfungselemente.

Der vorliegenden Erfindung lag deshalb die Aufgabe zugrunde, Verbundelemente zu entwickeln, die als Ersatz für bekannte Gummi-Metall-Verbunde dienen können, wobei insbesondere das Gewicht der Verbunde verringert werden sollte. Des weiteren sollte die Haftung zwischen den in den Verbundelementen enthaltenen Komponenten verbessert und insbesondere die beschriebene Verwendung von Haftvermittlern vermieden werden.

Diese Aufgabe konnte durch die eingangs definierten Verbundelemente dadurch gelöst werden.

Die Verbundelemente können bevorzugt derart hergestellt werden, daß man (ii) in Gegenwart von (i) herstellt, wobei (i) basiert auf der Umsetzung von (a) Isocyanaten mit (b) gegenüber Isocyanaten reaktiven Verbindungen gegebenenfalls in Gegenwart von (d) Katalysatoren und/oder (e) Hilfs- und/oder Zusatzstoffen bei einem bevorzugten Verhältnis der Isocyanatgruppen enthaltend in (a) zu den gegenüber Isocyanaten reaktiven Gruppen enthaltend in (b) von größer 1,06 : 1, besonders bevorzugt 1,1 : 1 bis 1,2 : 1.

In der Reaktionsmischung zur Herstellung der TPU (i) wird bevorzugt ein Überschuß an Isocyanatgruppen über die Gruppen, die gegenüber den Isocyanatgruppen reaktiv sind, eingesetzt. Dieser Überschuß läßt sich in dem molaren Verhältnis der Isocyanatgruppen in der Komponente (a) zu den gegenüber Isocyanaten reaktiven Gruppen in der Komponente (b) ausdrücken. Dieses Verhältnis ist wie beschrieben bevorzugt größer als 1,06 : 1 und beträgt besonders bevorzugt 1,1 : 1 bis 1,2 : 1.

Durch diesen Überschuß an Isocyanatgruppen wird erreicht, daß die freien Isocyanatgruppen bei der Herstellung der mikrozelligen Polyurethanelastomere mit deren Ausgangskomponenten, insbesondere der Komponente (b) zur Herstellung von (ii) reagieren, womit eine deutlich bessere Verbindung und damit Haftung zwischen (i) und (ii) erreicht wird. Zudem können die freien Isocyanatgruppen während und gegebenenfalls nach der Bildung der Urethangruppen durch Umsetzung von (a) mit (b) interne Vernetzungen in den TPU (i) in Form von beispielsweise Allophanat- und/oder Isocyanuratstrukturen bilden, die zu den verbesserten Eigenschaften der TPU führen. Die Bildung der Vernetzungen kann gegebenenfalls durch Zugabe von Katalysatoren, z.B. Alkaliacetate oder Formiate, die zu diesem Zweck allgemein bekannt sind, gefördert werden, wobei eine Verarbeitung des Umsetzungsproduktes, d.h. dem TPU, zu Folien, Formkörpern Spritzgußartikeln, Schläuchen, Kabelummantelungen und/oder Fasern bevorzugt bei und/oder direkt nach der Bildung der Urethangruppen und vor einer vollständigen Umsetzung der Reaktionsmischung erfolgen sollte, da eine thermoplastische Verarbeitung der Polyisocyanat-Polyadditionsprodukte zu Folien, Formkörpern oder Fasern bevorzugt bei niedrigen Temperaturen vor und/oder während der Ausbildung der Vernetzungen durchgeführt wird.

Die Umsetzung der Ausgangskomponenten in dem Verfahren zur Herstellung von TPU (i) kann nach bekannten Verfahren, beispielsweise dem one-shot-Verfahren oder dem Prepolymerverfahren, beispielsweise durch Umsetzung eines NCO-haltigen Prepolymers, das aus (a) und Teilen der Komponenten (b) hergestellt werden kann, mit dem restlichen (b) auf einer üblichen Bandanlage, mit einem bekannten Reaktionsextruder oder für diesen Zweck bekannten Anlagen erfolgen. Die Temperatur bei dieser Umsetzung beträgt üblicherweise 60 bis 250°C, bevorzugt 60 bis 180°C, besonders bevorzugt 70 bis 120°C. Während und gegebenenfalls nach der Bildung der Urethangruppen durch Umsetzung von (a) mit (b) können die Umsetzungsprodukte pelletiert, granuliert oder nach allgemein bekannten Verfahren, beispielsweise durch Extrusion in bekannten Extrudern, durch Spritzguß in üblichen Spritzgußmaschinen oder durch allgemein bekannte Spinnverfahren, beispielsweise durch Schmelzverspinnen, zu Formkörpern aller Art oder insbesondere Folien verarbeitet werden.

Bevorzugt wird man das Reaktionsgemisch zur Herstellung der TPU (i) während und gegebenenfalls nach der Bildung der Urethangruppen durch Umsetzung von (a) mit (b), besonders bevorzugt aus der Reaktionsschmelze und vor der vollständigen Ausbildung von Allophanat und/oder Isocyanuratvernetzungen auf Extrudern oder Spritzgußmaschinen zu Folien oder Formkörpern oder im Spinnverfahren zu Fasern verarbeiten. Diese direkte Weiterverarbeitung der Reaktionsmischung ohne eine Granulierung oder Pelletierung und ohne weitgehende oder vollständige Umsetzung der Reaktionsmischung bietet den Vorteil, daß eine Vernetzung durch Bildung beispielsweise von Allophanat- und/oder Isocyanuratstrukturen nur zu einem geringen Ausmaß oder gar nicht eingetreten ist und das Reaktionsgemisch dadurch bei einer erwünscht niedrigen Temperatur zu den Endprodukten wie beispielsweise Folien oder Formkörpern verarbeitet werden kann.

Bevorzugt kann die Verarbeitung des Reaktionsgemisches somit derart erfolgen, daß man die Reaktionsmischung zur Herstellung der TPU (i) in erweichtem oder geschmolzenen Zustand während der Umsetzung von (a) mit (b) besonders bevorzugt aus der Reaktionsschmelze und vor der vollständigen Ausbildung von Allophanat und/oder Iscocyanuratvernetzungen, bei einer Temperatur von 60 bis 180°C, bevorzugt 70 bis 120°C, auf Extrudern oder Spritzgußmaschinen zu Folien oder Formkörpern verarbeitet.

Bevorzugt kann man das Verfahrensprodukt, d.h. das TPU aus dem Extruder oder der Spritzgußmaschine bei einer Temperatur von 20 bis 120°C, bevorzugt 80 bis 120 °C für eine Zeitdauer von 2 bis 72 Stunden unter ansonsten üblichen Bedingungen tempern. Werden ungesättigte Komponenten (b) zur Herstellung der TPU eingesetzt, beispielsweise cis-1,4-Butendiol, so können die Formkörper oder Folien nach der Herstellung durch Bestrahlung, beispielsweise durch Elektronenbestrahlung behandelt werden.

Die derart erhältlichen TPU (i) werden erfindungsgemäß zur Herstellung der Verbundelemente eingesetzt. Besonders bevorzugt werden die TPU (i) in Form von Formkörpern, üblicherweise mit einer Dicke von 2 bis 12 mm verwendet.

Die Herstellung der Verbundelemente erfolgt erfindungsgemäß durch Herstellung der mikrozelligen Polyurethanelastomeren in Gegenwart von (i). Mikrozellige Polyurethanelastomere (ii) und Verfahren zu ihrer Herstellung sind allgemein bekannt. Sie weisen bevorzugt 5 eine Dichte von 300 bis 700 kg/m³, bevorzugt 350 bis 650 kg/m³, eine Zugfestigkeit nach DIN 53571 von 3 bis 8, bevorzugt 3,0 bis 7,0 N/mm², eine Bruchdehnung nach DIN 53571 von 350 bis 550, bevorzugt 350 bis 400 %, einen Weiterreißwiderstand nach DIN 53515 von 8 bis 30, bevorzugt 8 bis 20 N/mm, eine Rück-prallelastizität nach DIN 53512 von 50 bis 60 % und besonders bevorzugt eine Zellgröße von 50 bis 500 µm auf.

Die Herstellung von (ii) kann durch die allgemein bekannte Umsetzung von (a) Isocyanaten mit (b) gegenüber Isocyanaten 5 reaktiven Verbindungen in Gegenwart von (c) Treibmittel und gegebenenfalls (d) Katalysatoren und/oder Hilfs- und/oder Zusatzstoffen (e) erfolgen.

Bevorzugt führt man die Herstellung von (ii) in Gegenwart von (i) derart durch, daß man die Oberfläche von (i), beispielsweise durch übliche, bevorzugt organische, Lösungsmittel, entfettet und anschließend zur Herstellung von (ii) in Gegenwart von (i) (a) Isocyanate mit (b) gegenüber Isocyanaten reaktiven Verbindungen in Gegenwart von (c) Treibmitteln und gegebenenfalls (d) Kata-5 lysatoren und/oder (e) Hilfs- und/oder Zusatzstoffen umsetzt.

Zur Herstellung von (ii) werden (a) und (b) bevorzugt in solchen Mengen zur Umsetzung gebracht, daß das Äquivalenz-Verhältnis von NCO-Gruppen der Polyisocyanate (a) zur Summe der reaktiven Wasserstoffatome der Komponenten (b) 0,8:1 bis 1,2:1 beträgt.

Die mikrozelligen Polyurethanelastomere (ii) und damit die erfindungsgemäßen Verbundelemente werden vorteilhafterweise nach dem one shot-Verfahren oder Prepolymerverfahren beispielsweise 5 mit Hilfe der Hochdruck- oder Niederdruck-Technik in offenen oder geschlossenen, bevorzugt geschlossenen Formwerkzeugen, beispielsweise metallischen Formwerkzeugen, oder frei verschäumt (Ortschaum) hergestellt. Bevorzugt erfolgt die Herstellung der Verbundelemente in Formwerkzeugen, in die man das TPU (i) bevorzugt in Form eines Formkörpers plaziert. Die Umsetzung der Ausgangskomponenten zur Herstellung von (ii) erfolgt in direktem Kontakt mit (i), so daß aufgrund der Reaktion der Ausgangskomponenten eine Verbindung zwischen (i) und (ii) hergestellt wird. Die Innenwände der Formwerkzeuge, insbesondere die, die mit den Ausgangskomponenten zur Herstellung von (ii) in Kontakt kommen, können bevorzugt mit einem üblichen Trennmittel versehen werden. Besonders bevorzugt wird (ii) in einer geschlossenen Form, bevorzugt unter einem Verdichtungsgrad zwischen 1,1 und 8, besonders bevorzugt 2 bis 6 hergestellt.

Die Ausgangskomponenten werden üblicherweise bei einer Temperatur von 15 bis 90°C, vorzugsweise von 20 bis 60°C und insbesondere von 25 bis 45°C, gemischt und in das offene oder in das geschlossene Formwerkzeug eingebracht. Die Temperatur der inneren Oberfläche des Formwerkzeuges beträgt zweckmäßigerweise 20 bis 110°C, vorzugsweise 30 bis 100°C und insbesondere 70 bis 90°C.

Bei einem Prepolymerverfahren werden bevorzugt Isocyanatgruppen aufweisende Prepolymere verwendet. Die Prepolymere weisen vorzugsweise Isocyanatgehalte von 3 bis 5 Gew.-%, bezogen auf das Gesamtgewicht, auf. Diese können nach allgemein bekannten Verfahren hergestellt werden, beispielsweise durch die Umsetzung eines Gemisches, das ein Isocyanat (a) und mindestens eine Verbindung (b), die gegenüber Isocyanaten reaktiv ist, enthält, wobei die Umsetzung üblicherweise bei Temperaturen von 80 bis 160°C, vorzugsweise 90 bis 150°C durchgeführt wird. Soll ein Isocyanatgruppen-aufweisendes Prepolymer hergestellt werden, so wird zur Herstellung ein entsprechender Überschuß an Isocyanatgruppen gegenüber den Isocyanat-reaktiven Gruppen verwendet. Die Reaktion ist im allgemeinen nach 15 bis 200 min beendet.

Bevorzugt erfolgt das Verfahren derart, daß man (ii) in einer geschlossenen Form in Kontakt mit (i) durch Umsetzung eines Isocyanatgruppen aufweisenden Prepolymers mit einer Vernetzerkomponente enthaltend (c) Treibmittel, (d) Katalysatoren und (e) Hilfs- und/oder Zusatzstoffe herstellt. Die Vernetzerkomponente enthält bevorzugt (c) Wasser, (d) Katalysator und als (e) Polysiloxane, beispielsweise Polyethermethylsiloxane, sulfatiertes Rizinusöl und n-Alkylbenzolsulfonsäuren mit 9 bis 15 Kohlenstoffatomen im Alkylrest.

Im Folgenden sollen die Komponenten (a) bis (e) beispielhaft dargestellt werden. Die im Folgenden angegebenen Molekulargewichte weisen, soweit nicht genannt, die Einheit g/mol auf.
a) Als allgemein bekannte Isocyanate (a) kommen insbesondere organische Isocyanate, beispielsweise aliphatische, cycloaliphatische, araliphatische und/oder aromatische Isocyanate, bevorzugt Diioscyanate in Betracht. Im einzelnen seien beispielhaft genannt: Hexamethylen-diisocyanat-1,6, 2-Methyl-pentamethylendiisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1, 4-cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat, 1,4- und/oder 1,3-Di(isocyanatomethyl)-cyclohexan, 1,4- und/oder 1,3-Di(isocyanatoethyl)cyclohexan, 1,3- und/oder 1,4-Di(isocyanatomethyl)benzol, 2,4- und/oder 2,6-Toluylen-diisocyanat (TDI), p-Phenylendiisocyanat (PDI), p-Cyclohexandiisocyanat (CHDI), Tolidindiioscyanat (TODI), 4,4'-, 2,4'- und/oder 2,2'-Diphenylmethan-diisocyanat (MDI), Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan- (1,2) und/oder 1, 5-Naphthylen-diisocyanat (NDI). Vorzugsweise verwendet werden zur Herstellung der TPU Hexamethylen-diisocyanat-1,6, IPDI, MDI und/oder TDI. Die mikrozelligen Polyurethanelastomere basieren bevorzugt auf MDI, PDI, CHDI, TODI und/oder NDI, besonders bevorzugt auf MDI und/oder NDI.
b) Als gegenüber Isocyanaten reaktive Substanzen (b) werden zur Herstellung der TPU (i) bevorzugt gegenüber Isocyanaten reaktive Verbindungen (b1) mit Molekulargewichten von 500 bis 8000 eingesetzt, vorzugsweise solche mit einer mittleren Funktionalität, d.h. einer über die Komponente (b) gemittelten Funktionalität von 1,8 bis 2,5, vorzugsweise 1,9 bis 2,2, besonders bevorzugt 1,95 bis 2,1. Es eigenen sich beispielsweise Polyhydroxylverbindungen, vorzugsweise Polyetherole und Polyesterole.

Die Mischungen zur Herstellung der TPU bzw. die TPU müssen zumindest überwiegend auf difunktionellen gegenüber Isocyanaten reaktiven Substanzen basieren.

Des weiteren können als gegenüber Isocyanaten reaktive Substanzen (b) auch Polyamine, beispielsweise Aminterminierte Polyether, z.B. die unter dem Namen Jeffamine® (Texaco Chemical Co.) bekannten Verbindungen eingesetzt werden, wobei die mittlere Funktionalität der Komponente (b) in dem genannten Bereich liegen sollte.

Vorzugsweise verwendet werden Polyetherole auf Basis von üblichen Startersubstanzen und Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylen-glykole.

Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, vorzugsweise Adipinsäure und/oder aromatische Dicarbonsäuren, wie Phthalsäure, Isophthalsäure und/oder Terephthalsäure, und mehrwertigen Alkoholen, beispielsweise Ethandiol, Propandiol-1,3, Butandiol-1,4, Pentandiol-1,5, Hexandiol-1,6, Decandiol-1,10, 2,2-Dimethylpropandiol-1,3, Propandiol-1,2, Diethylenglykol und/oder Dipropylenglykol hergestellt werden.

Die Polyesterole besitzen üblicherweise Molekulargewichte von 500 bis 6000, vorzugsweise von 800 bis 3500.

Als Komponente (b) können des weiteren allgemein bekannte Kettenverlängerer (b2), die üblicherweise Molekulargewichte von kleiner 500 g/mol, bevorzugt 60 bis 499, besonders bevorzugt 60 bis 300 aufweisen, zusätzlich zu den genannten Verbindungen (b1) eingesetzt werden. Beispielsweise kommen Alkandiole und/oder Alkendiole und/oder Alkindiole mit 2 bis 12 Kohlenstoffatomen, vorzugsweise mit 2, 3, 4 oder 6 Kohlenstoffatomen, wie z.B. Ethandiol, Propan-1,2- und/oder -1,3-diol, Hexandiol-1,6, und insbesondere Butandiol-1,4 und/oder cis- und/oder trans-1,4-Butendiol und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4 und Hydroxyalkylenether des Hydrochinons, wie z.B. 1, 4-Di-(ß-hydroxyethyl)-hydrochinon. Zur Einstellung von Härte und Schmelzpunkt der TPU können die Komponenten (b1) und (b2) in relativ breiten molaren Verhältnissen variiert werden. Bewährt haben sich molare Verhältnisse von (b1) zu (b2) von 1 : 1 bis 1 : 12, insbesondere von 1 : 1,8 bis 1 6,4, wobei die Härte und der Schmelzpunkt der TPU mit zunehmendem Gehalt an (b2) ansteigt.

Als Komponente (b) zur Herstellung der mikrozelligen Polyurethanelastomere (ii) können zusätzlich zu den genannten Komponenten (b1) als Komponente (b1) allgemein bekannte gegenüber Isocyanaten reaktive Verbindungen, beispielsweise Polyetherole und/oder Polyesterole mit einem Molekulargewicht von 500 bis 8000 und einer Funktionalität von 1,8 bis 5 eingesetzt werden. Des weiteren können zusätzlich zu der bereits als (b2) genannten Kettenverlängerungsmitteln für (ii) allgemein bekannte Vernetzungsmittel (b3) verwendet werden, die üblicherweise eine Funktionalität von 3 bis 6 und ein Molekulargewicht von kleiner 500, bevorzugt 30 bis 400 aufweisen. Bevorzugt werden als (b) zur Herstellung von (ii) Polyesterole mit einer Funktionalität von 2 bis 3 und einem Molekulargewicht von 50 bis 8000 eingesetzt.
c) Zu den Treibmitteln (c), welche zur Herstellung der mikrozelligen Polyurethanelastomere (ii) eingesetzt werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 0,3 bis 3,0 Gew.-Teile und insbesondere 0,3 bis 2,0 Gew.-Teile, bezogen auf 100 Gew.-Teile der Komponente (b).
   Im Gemisch mit Wasser können gegebenenfalls auch bekannte, physikalisch wirkende Treibmittel eingesetzt werden. Besonders bevorzugt wird Wasser als alleiniges Treibmittel eingesetzt.
d) Geeignete Katalysatoren, welche insbesondere die Reaktion zwischen den NCO-Gruppen der Diisocyanate (a) und den Hydroxylgruppen der Aufbaukomponenten (b) beschleunigen, sind die nach dem Stand der Technik bekannten. Beispielsweise können die üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat eingesetzt werden. Die Katalysatoren (c) werden üblicherweise in Mengen von 0,002 bis 0,1 Teilen pro 100 Teile (b) eingesetzt.
e) Als übliche Hilfsmittel und/oder Zusatzstoffe (d) können beispielsweise oberflächenaktive Substanzen, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, anorganische und/oder organische Füllstoffe, Verstärkungsmittel und Weichmacher verwendet werden. Als Hilfs- und/oder Zusatzstoffe zur Herstellung von (ii) kommen insbesondere auch die in der DE-A 195 48 771, Seite 8, Zeilen 6 bis 16 genannten Verbindungen in Betracht, beispielsweise die bereits genannten Polysiloxane, beispielsweise Polyethermethylsiloxane, sulfatiertes Rizinusöl und n-Alkylbenzolsulfonsäuren mit 9 bis 15 Kohlenstoffatomen im Alkylrest.

Nähere Angaben über die oben genannten Hilfsmittel- und Zusatzstoffe sind der Fachliteratur zu entnehmen.

Die erfindungsgemäßen Verbundelementen werden bevorzugt als Dämpfungselemente im Fahrzeugbau, beispielsweise im Automobilbau als Querlenkerlager, Hinterachsfahrschemellager, Stabilisator-Lager, Längsstreben-Lager, Federbein-Stützlager, Stoßdämpferlager und/oder Lager für Dreieckslenker verwendet.

Die erfindungsgemäßen Verbundelemente, insbesondere die Dämpfungselemente, weisen nicht nur eine deutlich verbesserte Haftung zwischen den (i) thermoplastischen Polyurethanen (TPU) und den mikrozelligen Polyurethanelastomeren (ii) auf, sondern auch verbesserte mechanische Eigenschaften von (i), insbesondere in Bezug auf den Abrieb und die Zugfestigkeit.

Diese Vorteile sollen anhand der folgenden Beispiele näher dargestellt werden.

### Herstellung der TPU (i)

Die in der Tabelle 1 dargestellten Rezepturen wurden in einem Reaktionsextruder bei den in Tabelle 2 angegebenen Kennzahlen zu thermoplastischen Polyurethanen umgesetzt. Aus diesem TPU wurden anschließend Prüfstäbe der Abmessung 120 mm x 30 mm x 5 mm gefertigt. Die Eigenschaften der TPU bzw. der Prüfstäbe sind in der Tabelle 2 angegeben.

**Tabelle 1**

| A-Komponente | Menge [Gew.-Teile] |
|---|---|
| Polyol 1 | 51,54 |
| Butan-1,4-diol | 10,93 |
| Elastostab® H01 | 0,41 |
| | |
| B-Komponente: | |
| Lupranat® MET | Anteil je nach Kennzahl |

Polyol 1: Lupraphen® 9066, kommerziell erhältlich bei der Elastogran GmbH

Elastostab® H01: Hydrolysestabilisator der Elastogran GmbH Lupranat® MET: Isocyanat, kommerziell erhältlich bei der Elastogran GmbH

**Tabelle 2**

| Beispiel | 1 | 2 | 3 | 4 |
|---|---|---|---|---|
| Kennzahl | 100 | 105 | 110 | 115 |
| Gesamtisocyanatgehalt im TPU, ungetempert [%] | 0,30 | 0,48 | 0,47 | 0,47 |
| Gesamtisocyanatgehalt im TPU, getempert 30 min bei 120°C [%] | 0,18 | 0,47 | 0,47 | 0,47 |
| Reißdehnung [%] | 490 | 480 | 490 | 480 |
| Zugfestigkeit [N/mm²] | 53 | 55 | 54 | 56 |
| Abrieb [mm³] | 25 | 30 | 40 | 37 |
| Shore-Härte [D] | 55 | 54 | 57 | 57 |
| Dichte [g/cm³] | 1,21 | 1,21 | 1,215 | 1,215 |

Die Herstellung der Verbundelemente erfolgte derart, daß die gereinigten Stäbe einzeln in eine Form gelegt eine Reaktionsmischung in die Form gefüllt wurde. Das mikrozellige Polyurethan entstand in direktem Kontakt mit dem TPU. Die Formtemperatur betrug 60°C.

Als Reaktionsmischung zur Herstellung der mikrozelligen Polyurethane wurde ein System analog dem Kunststoffhandbuch, Band 7, "Polyurethane", herausgegeben von Günter Oertel, 3. Auflage, 1993, Carl-Hanser-Verlag, Seite 428, Beispiel 5 eingesetzt.

Die hergestellten Verbundelemente wiesen Dichten von 600 g/cm³ auf. Die Verbundelemente wurden anschließend für 16 Stunden bei 110 °C getempert und nach weiteren 5 bis 21 Tagen auf ihre Eigenschaften hin untersucht. Insbesondere wurde die Reißfestigkeit und das Bruchbild der Verbundelemente überprüft. Die Überprüfung des Parameter erfolgte im Zugversuch bei einer Vorschubgeschwindigkeit von 20 mm/min. Die Verbundelemente bestehend aus zwei TPU-Stäben, die durch haftendes mikrozelliges Polyurethan verbunden waren, wurden über die TPUs derart in die Apparatur einspannt, daß sie auf Zug und Abscheren bis zum Bruch belastet werden konnten. Dabei wurden die TPU-Stäbe in entgegengesetzter Richtung mit der angegebenen Vorschubgeschwindigkeit gezogen. In der Tabelle 3 sind die Eigenschaften der Verbundelemente dargestellt.

**Tabelle 3**

| TPU | Reißfestigkeit [N/mm²] | Bruchbild |
|---|---|---|
| Beispiel 1 (Kennzahl 100) | 1,07 | PUR vom TPU gelöst, geringe Reste von PUR auf dem TPU |
| Beispiel 2 (Kennzahl 105) | 1,23 | PUR vom TPU gelöst, Reste vom PUR auf dem TPU |
| Beispiel 3 (Kennzahl 110) | 1,51 | PUR teilweise von TPU gelöst, Reste vom PUR auf dem TPU |
| Beispiel 4 (Kennzahl 115) | 1,52 | PUR teilweise vom TPU gelöst, Reste vom PUR auf dem TPU |

Die mikrozelligen Polyurethane sind in der Tabelle 3 mit der Abkürzung PUR bezeichnet. Mit steigender Kennzahl des TPUs steigt die Reißfestigkeit des Verbundes aus TPU und mikrozelligem Polyurethan.

Anhand der Ergebnisse wird deutlich, daß die gestellte Aufgabe durch die erfindungsgemäßen Verbundelemente gelöst werden konnte. Die erfindungsgemäßen Verbundelemente weisen eine deutlich verbesserte Reißfestigkeit auf. Zudem zeigt das Bruchbild, daß die Haftung zwischen den zelligen Polyurethanen und dem TPU deutlich verbessert werden konnte.

## Patentansprüche

1. Verbundelemente enthaltend
(i) thermoplastische Polyurethane und daran haftend
(ii)mikrozellige Polyurethanelastomere mit einer Dichte von 300 bis 700 kg/m³, einer Zugfestigkeit nach DIN 53571 von 3 bis 8 N/mm², einer Bruchdehnung nach DIN 53571 von 350 bis 550 %, einem Weiterreißwiderstand nach DIN 53515 von 8 bis 30 N/mm und einer Rückprallelastizität nach DIN 53512 von 50 bis 60 %.

2. Verfahren zur Herstellung von Verbundelementen gemäß Anspruch 1 durch Herstellung von (ii) in Gegenwart von (i), **dadurch gekennzeichnet, daß** (i) basiert auf der Umsetzung von (a) Isocyanaten mit (b) gegenüber Isocyanaten reaktiven Verbindungen gegebenenfalls in Gegenwart von (d) Katalysatoren und/oder (e) Hilfs- und/oder Zusatzstoffen bei einem Verhältnis der Isocyanatgruppen enthaltend in (a) zu den gegenüber Isocyanaten reaktiven Gruppen enthaltend in (b) von größer 1,06 : 1.

3. Verfahren nach Anspruch 2, **dadurch gekennzeichnet, daß** das Verhältnis der Isocyanatgruppen enthaltend in (a) zu den gegenüber Isocyanaten reaktiven Gruppen enthaltend in (b) 1,1 : 1 bis 1,2 : 1 beträgt.

4. Verfahren nach Anspruch 2, **dadurch gekennzeichnet, daß** man (ii) in einer geschlossenen Form in Kontakt mit (i) durch Umsetzung eines Isocyanatgruppen aufweisenden Prepolymers mit einer Vernetzerkomponente enthaltend (c) Treibmittel, (d) Katalysatoren und (e) Hilfs- und/oder Zusatzstoffe herstellt.

5. Verfahren nach Anspruch 2, **dadurch gekennzeichnet, daß** man die Oberfläche von (i), an die (ii) haftet, vor der Herstellung von (ii) entfettet.

6. Verfahren nach Anspruch 4, **dadurch gekennzeichnet, daß** die Vernetzerkomponente (c) Wasser, (d) Katalysator und als (e) Polysiloxane, sulfatiertes Rizinusöl und n-Alkylbenzolsulfonsäuren mit 9 bis 15 Kohlenstoffatomen im Alkylrest enthält.

7. Verwendung von Verbundelementen nach Anspruch 1 als Dämpfungselemente im Fahrzeugbau.

8. Dämpfungselemente im Fahrzeugbau enthaltend Verbundelemente gemäß Anspruch 1.

## Claims

1. Composite elements comprising
(i) thermoplastic polyurethanes and, adhering thereto,
(ii)microcellular polyurethane elastomers with a density of from 300 to 700 kg/m³, a tensile strength to DIN 53571 of from 3 to 8 N/mm², an elongation at break to DIN 53571 of from 350 to 550%, a tear propagation resistance to DIN 53515 of from 8 to 30 N/mm and a rebound resilience to DIN 53512 of from 50 to 60%.

2. A process for producing composite elements as claimed in claim 1 by preparing (ii) in the presence of (i), which comprises basing (i) on the reaction of (a) isocyanates with (b) compounds reactive to isocyanates, if desired in the presence of (d) catalysts and/or (e) auxiliaries and/or additives, where the ratio of the isocyanate groups present in (a) to the groups present in (b) and reactive to isocyanates is greater than 1.06:1.

3. A process as claimed in claim 2, wherein the ratio of the isocyanate groups present in (a) to the groups present in (b) and reactive to isocyanates is from 1.1 : 1 to 1.2 **:** 1.

4. A process as claimed in claim 2, wherein (ii) is prepared in a closed mold in contact with (i) by reacting a prepolymer having isocyanate groups with a crosslinking agent component comprising (c) blowing agent, (d) catalysts and (e) auxiliaries and/or additives.

5. A process as claimed in claim 2, wherein the preparation of (ii) is preceded by degreasing that surface of (i) to which (ii) adheres.

6. A process as claimed in claim 4, wherein the crosslinking agent component comprises (c) water, (d) catalyst and, as (e), polysiloxanes, sulfated castor oil or n-alkylbenzenesulfonic acids having from 9 to 15 carbon atoms in the alkyl radical.

7. The use of composite elements as claimed in claim 1 as damping elements in automotive construction.

8. A damping element in automotive construction comprising composite elements as claimed in claim 1.

## Revendications

1. Eléments composites contenant
(i) du polyuréthane thermoplastique et, y adhérant,
(ii) des élastomères de polyuréthane microcellulaires présentant une densité de 300 à 700 kg/m³, une résistance à la traction selon la norme DIN 53571 de 3 à 8 N/mm², un allongement à la rupture selon la norme DIN 53571 de 350 à 550 %, une résistance à l'allongement d'une déchirure amorcée selon la norme DIN 53515 de 8 à 30 N/mm et une élasticité de rebondissement selon la norme DIN 53512 de 50 à 60 %.

2. Procédé pour la fabrication d'éléments composites selon la revendication 1 par fabrication de (ii) en présence de (i), **caractérisé en ce que** (i) est basé sur la transformation (a) d'isocyanates avec (b) des composés réactifs par rapport aux isocyanates, le cas échéant en présence (d) de catalyseurs et/ou (e) d'adjuvants et/ou d'additifs à un rapport groupes isocyanate contenus dans (a) à groupes réactifs par rapport aux isocyanates contenus dans (b) supérieur à 1,06:1.

3. Procédé selon la revendication 2, **caractérisé en ce que** le rapport groupes isocyanate contenus dans (a) à groupes réactifs par rapport aux isocyanates contenus dans (b) est de 1,1:1 à 1,2:1.

4. Procédé selon la revendication 2, **caractérisé en ce qu'**on prépare (ii) dans une forme fermée en contact avec (i) par transformation d'un prépolymère présentant des groupes isocyanate avec un composant de réticulation contenant (c) un agent moussant, (d) des catalyseurs et (e) des adjuvants et/ou des additifs.

5. Procédé selon la revendication 2, **caractérisé en ce que** la surface de (i) à laquelle adhère (ii) est dégraissée avant la fabrication de (ii).

6. Procédé selon la revendication 4, **caractérisé en ce que** le composant de réticulation contient (c) de l'eau, (d) un catalyseur et comme (e) un polysiloxane, de l'huile de ricin sulfatée et des acides n-alkylbenzènesulfoniques comprenant 9 à 15 atomes de carbone dans le radical alkyle.

7. Utilisation des éléments composites selon la revendication 1 comme éléments amortisseurs dans la construction des véhicules.

8. Eléménts amortisseurs dans la construction des véhicules contenant des éléments composites selon la revendication 1.
